# EUROPÄISCHE PATENTSCHRIFT

(11) **EP 1 081 398 B1**
(45) Veröffentlichungstag und Bekanntmachung des Hinweises auf die Patenterteilung: **16.03.2005**
(21) Anmeldenummer: 00117697.3
(22) Anmeldetag: 17.08.2000
(51) Int. Cl.: F16C 13/02, F16C 32/06, D21G 1/02, D21G 1/00, F16C 13/00

(54) **Vorrichtung zur hydrostatischen Abstützung eines Walzenmantels**
Hydrostatic supporting device for the outer shell of a roll
Dispositif hydrostatique de support de l'enveloppe externe d'un rouleau

(30) Priorität: 31.08.1999 DE 29915223 U
(43) Veröffentlichungstag der Anmeldung: 07.03.2001
(73) Patentinhaber: Voith Paper Patent GmbH, 89522 Heidenheim (DE)
(72) Erfinder: Fuchert, Franz-Peter, 47804 Krefeld (DE); Hinz, Joachim, 47906 Kempen (DE); Schneid, Josef, 88276 Vogt (DE); Stein, Heinrich, 41063 Mönchengladbach (DE); Wiemer, Peter, Dr., 40668 Meerbusch (DE); Schuster, Thomas, 46509 Xanten (DE)
(74) Vertreter: Knoblauch, Andreas, Dr.-Ing.

(56) Entgegenhaltungen:
- WO-A-98/36185
- DE-A- 10 030 083
- US-A- 3 791 703
- US-A- 4 113 325
- US-A- 4 858 292
- US-A- 5 534 117

## Beschreibung

Die Erfindung betrifft eine Vorrichtung zur hydrostatischen Abstützung eines Walzenmantels nach dem Oberbegriff des Anspruchs 1.

Beim Trenn- bzw. Schnelltrennvorgang der Walzen eines Kalanders wird der Trennweg einer Walze, die auf einer zu diesem Zwecke absenkbaren hydrostatischen Stützeinrichtung abgestützt ist, außerordentlich rasch durchlaufen. Dabei wird das stützende Druckfluid aus dem Druckraum einer einzelnen Stützeinrichtungen über eine Steuerdruckleitung abgeführt und somit der Walzenmantel relativ zur Stützachse abgesenkt. Um eine Überbeanspruchung durch stoßartiges Zusammentreffen des Walzenmantels mit einer Trägerachse zu vermeiden bedarf es einer Vorrichtung, die die Absenkung vor Erreichen der Hartlage zwischen Walze und Träger abbremst.

Eine Vorrichtung zur hydrostatischen Abstützung eines Walzenmantels, die mindestens ein bewegliches Stützelement, das kolbenartig in einem Druckraum geführt ist, in dem über mindestens eine Steuerdruckleitung ein Druckfluid zu- und/oder abführbar ist, und eine Drossel, die den Strömungswiderstand für das Fluid verändert, aufweist ist aus DE 30 04 916 C2 bekannt. Bei dieser Vorrichtung ist die Steuerdruckleitung an eine Steuervorrichtung außerhalb der Walze angeschlossen, die ein Sperrorgan und ein damit verbundenes Drosselorgan enthält. Dieses Drosselorgan ist derart veränderbar, daß der Drosselwiderstand nach Auftreten eines Trennsignals zunächst sehr klein ist, am Ende des Trennvorgangs aber zur Abbremsung der Bewegung zunimmt.

Eine Überbeanspruchung der Anlage in Folge eines Trennvorgangs kann mit dieser Vorrichtung vermieden werden. Dabei ist das System jedoch von einer exakten Einstellung und zuverlässigen und genauen Funktionsweise des Drosselorgans abhängig.

WO 98/36185 A1 zeigt eine Vorrichtung mit sämtlichen Merkmalen des Oberbegriffs des Anspruchs 1, insbesondere ein Lager-Steuersystem für eine Walze mit hydrostatischen Lagern. Die Walze ist mit ihrem Walzenzapfen in hydrostatischen Lagern gelagert, die in Umfangsrichtung verteilt angeordnet sind. Dabei befinden sich drei hydrostatische Lager an der unteren Hälfte des Umfangs des Walzenzapfens und ein Lager am Scheitelpunkt. Die unteren Lager werden über eine Druckleitung mit Druck versorgt, wobei in die Druckleitung eine Drossel mit einem Drosselelement eingebaut ist, das von dem beweglichen Stützelement des untersten hydrostatischen Lagers verstellt wird. Das Drosselelement ist als Schieber mit scheibenartigen Vorsprüngen ausgebildet, die mit umlaufenden Nuten in einem Drosselgehäuse zusammenwirken.

Der Erfindung liegt die Aufgabe zugrunde mit einfachen Mitteln ein Abbremsen der Walze beim Schnelltrennvorgang zu erreichen.

Diese Aufgabe wird von einer Vorrichtung der eingangs genannten Art mit den Merkmalen des kennzeichnenden Teils des Anspruchs 1 gelöst.

Diese Vorrichtung bewirkt direkt gesteuert durch den Weg des beweglichen Stützelementes beim Trennvorgang die Abbremsung der Trennbewegung durch Drosselung der Ausströmung des Druckfluids aus dem Druckraum einer Kolben-Zylinder-Einheit. Dadurch wird direkt in einer Stützeinrichtung eine Abbremsung der Trennbewegung erreicht, die eine Überbeanspruchung der Anlage verhindert. Die Drosselvorrichtung kann alleine oder zusätzlich zu einer an die Steuerdruckleitung angeschlossenen Drosselvorrichtung angeordnet werden, was eine zusätzliche Verbesserung der Abbremsung und eine höhere Funktionssicherheit bezüglich der Drosselung des Trennvorgangs bewirkt. Eine Rohr-Hülse-Anordnung ermöglicht eine Vielzahl von Steuerungsmöglichkeiten des Strömungswiderstandes je nach Anordnung, Größe und Form des Strömungspfades. Somit kann die Abstützvorrichtung sehr ge-nau an die für eine einzelne Vorrichtung vorgesehenen Betriebsbedingungen angepaßt werden. Hierdurch wird die Gefahr von Schäden in Folge eines Schnelltrennvorganges reduziert. Der Verlauf der Geschwindigkeit über die Absenkbewegung kann relativ genau gesteuert werden. Man kann beispielsweise zu Beginn der Bewegung eine relativ hohe Geschwindigkeit zulassen und diese Geschwindigkeit dann allmählich verringern.

Mit Vorteil ist ein beweglicher Teil der Drossel mit dem beweglichen Stützelement verbunden. Diese direkte Verbindung bewirkt die direkte Betätigung der Drossel durch das bewegliche Stützelement, das somit in Folge seiner eigenen Bewegung die eigene Abbremsung erzielt.

Dadurch sind keine weiteren Steuereinrichtungen notwendig, was zu einer hohen Funktionssicherheit und zu einer Kostenminimierung führt.

Es ist günstig, daß ein Ablaufquerschnitt des Strömungspfades in einer Wand eines der beiden Teile von Rohr und Abdeckhülse angeordnet und durch das andere der beiden Teile zumindest teilweise verschließbar ist. Hierbei erfolgt durch die Bewegung des Rohres und der Abdeckhülse relativ zueinander eine Steuerung des Ablaufquerschnitts und somit des Strömungswiderstandes in den Strömungspfad. Für die Anordnung des Ablaufquerschnitts in der Wand des Rohres, der Abdeckhülse oder in beiden Teilen besteht dabei eine große Auswahlmöglichkeit.

Von Vorteil ist, daß die Abdeckhülse aus einem flexiblen Material besteht. Hierdurch ist eine relativ gute Abdichtung zwischen dem Rohr und der Abdeckhülse möglich, was stabilere Strömungsverhältnisse bewirkt. Dies ermöglicht einen gleichbleibend guten Betrieb der Vorrichtung.

Weiterhin ist es günstig, daß das Rohr über einen gesamten Kolbenhub des Stützelementes von der Abdeckhülse umgeben ist. Damit ist eine Steuerung des Strömungswiderstandes über den gesamten Kolbenhub möglich. Außerdem ist das Rohr über den gesamten Kolbenhub geführt, wodurch die Gefahr von Störungen im Betrieb, beispielsweise durch Verkantungen, vermindert wird.

In einer vorteilhaften Ausgestaltung ist das Rohr mit dem beweglichen Stützelement und die Abdeckhülse mit der Steuerdruckleitung verbunden. Somit senkt sich das Rohr bei einem Schnelltrennvorgang zusammen mit dem Stützelement ab und wird dabei relativ zu der positionsfesten Abdeckhülse bewegt. Hierdurch ist die Drossel direkt durch das bewegliche Stützelement gesteuert, dessen Bewegung abgebremst werden soll. Dies gewährleistet eine hohe Betriebssicherheit der Vorrichtung.

Weiterhin ist von Vorteil, daß die Abdeckhülse in einer Aufweitung der Steuerdruckleitung angeordnet ist, wobei die Aufweitung in einem Teil der Steuerdruckleitung liegt, der sich an den Druckraum anschließt. Eine derartige Anordnung in einer Aufweitung der Steuerdruckleitung ermöglicht eine belastungsfähige und beständige Verbindung der Abdeckhülse mit der Steuerdruckleitung. Hierdurch kann eine höhere Stabilität der Vorrichtung erreicht werden.

In einer anderen vorteilhaften Ausgestaltung ist das Rohr mit der Steuerdruckleitung und die Abdeckhülse mit dem beweglichen Stützelement verbunden und beide Stirnseiten des Rohres sind offen. Hierbei senkt sich die Abdeckhülse zusammen mit dem Stützelement ab und wird dabei relativ zu dem positionsfesten Rohr bewegt. Die beidseitigen Öffnungen des Rohres sorgen für gleichmäßige Strömungsbedingungen in der Vorrichtung beim Ausund Zuströmen des Druckfluids.

Es ist günstig, daß der Ablaufquerschnitt durch mehrere Bohrungen in der Wand des Rohres oder der Abdeckhülse gebildet ist. Hierdurch läßt sich der Ablaufquerschnitt in nahezu beliebiger Weise über die Länge des Rohres oder der Abdeckhülse verteilen. Außerdem lassen sich die einzelnen Öffnungen auf diese Weise einfach herstellen.

Weiterhin ist vorteilhaft, daß die Bohrungen über die Länge des Rohres gleichmäßig verteilt sind. Dies kann beispielsweise dadurch realisiert werden, daß die Öffnungen alle gleich groß sind und in Längsrichtung mit gleichen Abständen angeordnet sind. Wenn nun das Stützelement abgesenkt wird, wird eine quasi linear immer größer werdende Ablaufquerschnittsfläche abgedeckt. Der Strömungswiderstand wird damit quasi kontinuierlich größer.

Vorzugsweise sind die Bohrungen nach einer vorbestimmten nicht linearen Funktion über die Länge des Rohres verteilt, bei der der Ablaufquerschnitt zum Ende einer Absenkbewegung überproportional abnimmt. Damit ist es möglich, zu Beginn einer Absenkbewegung einen weitaus größeren Ablaufquerschnitt zur Verfügung zu stellen, der ein schnelles Absenken erlaubt, während die Stützeinheit zum Ende der Bewegung hin stärker abgebremst wird.

Weiterhin ist von Vorteil, daß der Ablaufquerschnitt durch mindestens eine sich axial erstreckende Nut in einer Berührungsfläche zwischen Rohr und Abdeckhülse, insbesondere in der Wand des Rohres, gebildet ist. Durch die Nut läßt sich ein relativ hoher Strömungswiderstand realisieren. Die Außenwand des Rohres ist für eine Bearbeitung leicht zugänglich.

Es ist günstig, daß die Nut eine sich in Axialrichtung verändernde Querschnittsform aufweist, insbesondere eine konische Form. Hierdurch kann beim Absenken des Stützelements eine nicht lineare und insbesondere eine überproportionale Zunahme des Strömungswiderstandes eingestellt werden.

Von Vorteil ist, daß der Ablaufquerschnitt durch mehrere sich axial erstreckende Nuten gebildet ist, die zumindest teilweise unterschiedliche Längen aufweisen und insbesondere zu einer Seite hin bündig abschließen. Durch eine derartige Anordnung läßt sich ein Ablaufverhalten einzelner, verschiedener Nuten bei der Steuerung des Strömungswiderstandes beliebig kombinieren.

Die Erfindung wird im folgenden anhand eines bevorzugten Ausführungsbeispiels in Verbindung mit der Zeichnung näher beschrieben. Hierin zeigen:
- Fig. 1: eine schematische Vorderansicht einer absenkbaren Walze,
- Fig. 2a und 2b: Schnitte durch jeweils ein Stützelement mit einem beweglichen Rohr,
- Fig. 3a und 3b: Schnitte durch jeweils ein Stützelement mit einer beweglichen Abdeckhülse und
- Fig. 4a und 4b: Ansichten von zwei Ausführungsformen des Rohres.

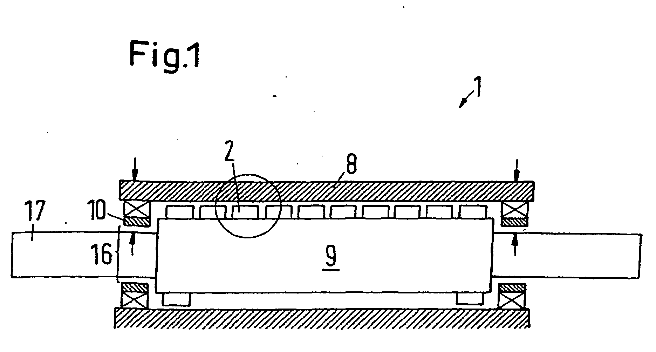

Die in Fig. 1 veranschaulichte unterste Walze 1 eines nicht näher dargestellten Kalanders weist einen Walzenmantel 8 auf, der vertikal in einer Pressenebene beweglich über eine mehrere in Walzenrichtung versetzt angeordnete Kolben-Zylinder-Einheiten 2 aufweisende, hydrostatische Mantelstützeinrichtung auf einem Träger 9 abgestützt ist. Jede dieser Kolben-Zylinder-Einheiten 2 weist einen Kolben 3 mit einem Lagerelement 4 und einen Zylinder 5 auf, der im Träger 9 angeordnet ist. Dabei bilden der Kolben 3 und das Lagerelement 4 ein bewegliches Stützelement 14. Ein durch das bewegliche Stützelement 14 und den Zylinder 5 begrenzter Druckraum 6 ist mit einer im Träger 9 verlaufenden Steuerdruckleitung 7 verbunden.

An den Enden des Walzenmantels 8 sind Lagereinsätze 10 vorgesehen, auf deren Umfangsfläche der Walzenmantel 8 gelagert ist. Außerdem besitzen sie eine Aussparung 16 derart, daß der Lagereinsatz 10 drehfest, aber in Pressenebene vertikal verschiebbar gehalten ist.

Im weiteren Verlauf der Steuerdruckleitung 7 befindet sich eine Steuervorrichtung (nicht dargestellt) mit einem eingebauten Sperrorgan. Bei Auftreten eines Trennsignals wird dieses geöffnet, was zu einem raschen Austritt des Druckfluids aus der Kolben-Zylinder-Einheit 2 und damit zur Absenkung des beweglichen Stützelements 14 bzw. des Walzenmantels 8 führt.

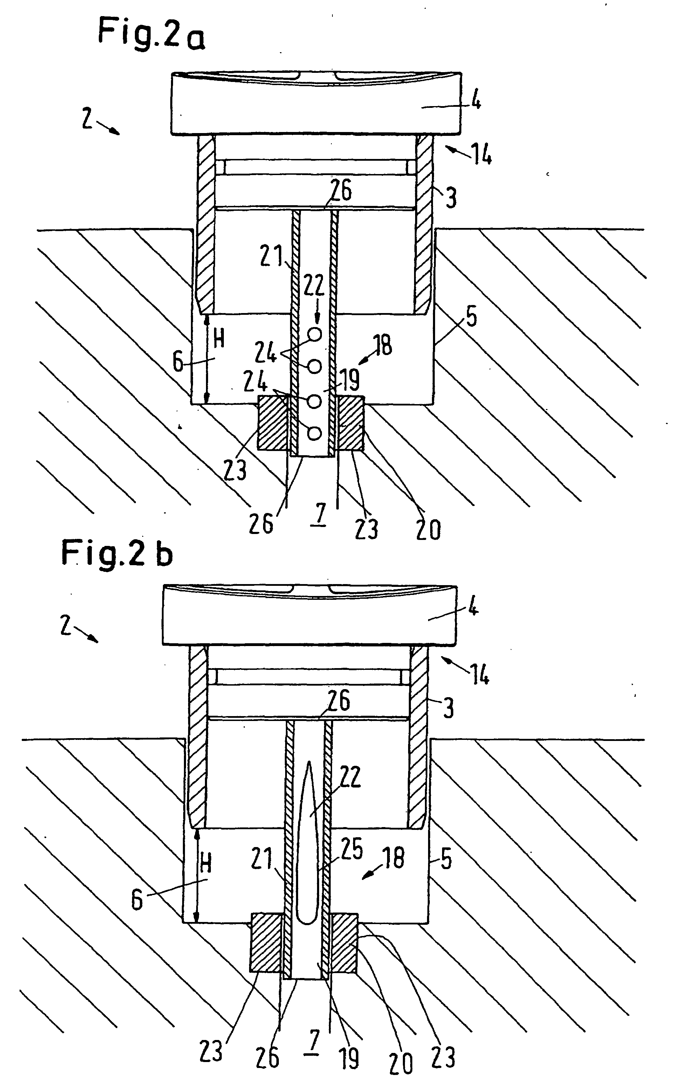

In einer Ausführungsform nach den Fig. 2a und 2b weist die Drossel eine Rohr-Hülse-Anordnung 18 auf. Diese besteht aus einem Rohr 19, das mit dem Stützelement 14 verbunden ist und einer Abdeckhülse 20, die unterhalb des Druckraumes 6 angeordnet und mit der Steuerdruckleitung 7 verbunden ist. Die Abdeckhülse 20 ist in einer Aufweitung 23 der Steuerdruckleitung 7 angeordnet, wobei die Steuerdruckleitung 7 außerhalb der Aufweitung 23 und die Abdeckhülse 20 den gleichen Innendurchmesser haben.

Bei einem Schnelltrennvorgang wird das Rohr 19 zusammen mit dem Stützelement 14 abgesenkt. Gleichzeitig strömt das Druckfluid aus dem Druckraum 6 über einen Strömungspfad durch die Rohr-Hülse-Anordnung 18 und in die Steuerdruckleitung 7. Außerdem dringt das Rohr 19 beim Absenken des Stützelements 14 zunehmend in die Abdeckhülse 20 bzw. in die anschließende Steuerdruckleitung 7 ein. Beim Eindringen wird ein immer größer werdender Teil der Wand 21 des Rohres 19 von der Abdeckhülse 20 bzw. der Steuerdruckleitung 7 abgedeckt. Auf diese Weise wird, wie weiter unten erläutert wird, mit zunehmender Absenkung ein Ablaufquerschnitt (schematisch mit dem Bezugszeichen 22 bezeichnet) zunehmend vermindert. Mit dieser zunehmenden Verminderung des Ablaufquerschnittes erhöht sich der Strömungswiderstand des Strömungspfades. Hierdurch wird die Absenkung des Stützelements 14 bei einem Schnelltrennvorgang abgebremst, wodurch Beschädigungen durch ein stoßartiges Erreichen der Hartlage zwischen Stützelement 14 und Träger 9 vermieden werden können.

In Fig. 2a ist der Ablaufquerschnitt durch mehrere Bohrungen 24 gebildet, die in axialer Richtung des Rohres hintereinander in der Wand 21 des Rohres 19 angeordnet sind und die gleiche Durchmesser und untereinander gleiche Abstände aufweisen. Die Bohrungen 24 sind dabei in einem Teil des Rohres 19 angeordnet, der bei Hartlage zwischen dem Stützelement 14 und dem Träger 9 vollständig durch die Abdeckhülse 20 oder die Steuerdruckleitung 7 eingeschlossen ist.

In einer anderen Ausführungsform nach Fig. 2b ist der Ablaufquerschnitt durch eine Nut 25 gebildet. Diese erstreckt sich in axialer Richtung in der Wand 21 des Rohres 19 und nimmt an Breite in Absenkrichtung konisch zu. Durch eine derartige Ausformung der Nut 25 wird erreicht, daß bei einem Absenkvorgang zunächst ein sehr großer Ablaufquerschnitt zwischen der Außenseite des Rohers 19 und der Innenseite der Abdeckhülse zur Verfügung steht. Entsprechend ist der Strömungswiderstand des Strömungspfades zu Beginn des Absenkvorganges relativ gering. Während des Absenkvorganges nimmt der Ablaufquerschnitt jedoch überproportional ab und der Strömungswiderstand entsprechend überproportional zu. Auf diese Weise erfolgt am Ende der Absenkung eine relativ starke Abbremsung des Stützelements. Die Nut kann auch eine andere Form haben, beispielsweise dreieckförmig oder kerbartig.

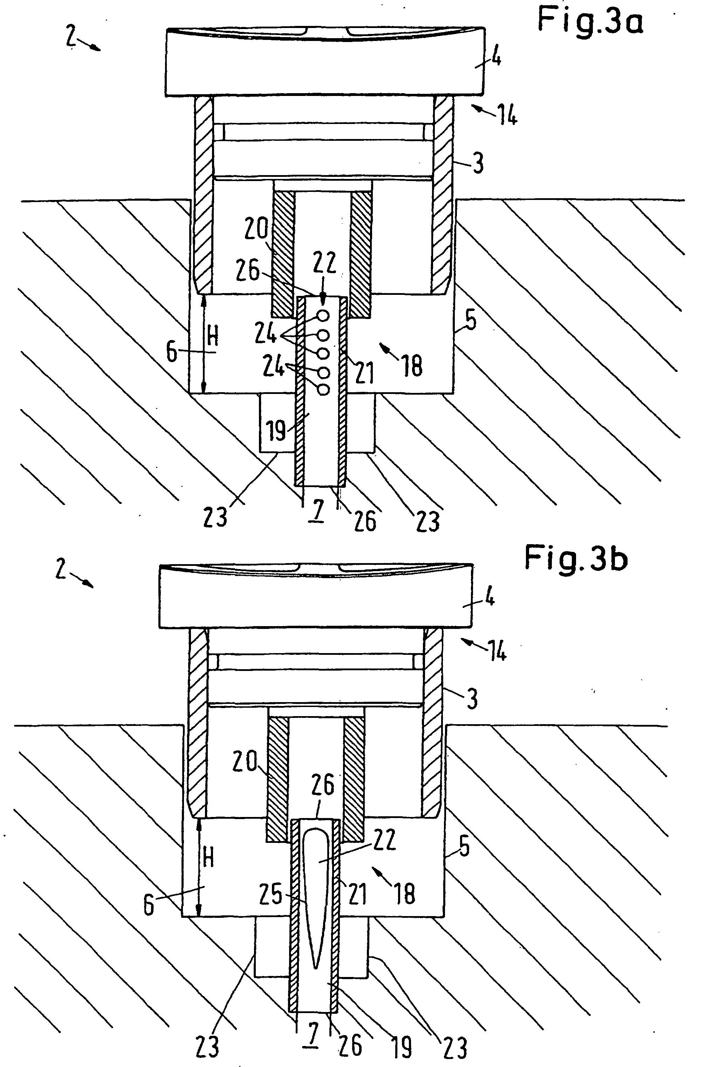

In einer weiteren Ausführungsform nach Fig. 3a und 3b ist die Abdeckhülse 20 mit dem Stützelement 14 verbunden. Das Rohr 19 steht unterhalb des Druckraumes 6 mit der Steuerdruckleitung 7 in fester Verbindung und ragt teilweise in den Druckraum 6 hinein.

Bei einem Schnelltrennvorgang wird bei einer derartigen Ausführungsform die Abdeckhülse 20 zusammen mit dem Stützelement 14 abgesenkt. Dabei wird die Abdeckhülse 20 zunehmend über das Rohr 19 geschoben und schließt damit einen immer größer werdenden Teil der Wand 21 des Rohres 19 ein. Hierdurch vermindert sich auch zunehmend der Ablaufquerschnitt in der Wand 21, über den das Druckfluid aus dem Druckraum 6 in die Steuerdruckleitung 7 abfließen kann. Somit wird der Strömungswiderstand des Strömungspfades erhöht und das Stützelement 14 in seiner Absenkbewegung abgebremst.

In der Ausführungsform nach Fig. 3a ist der Ablaufquerschnitt in der Wand 21 des Rohres 19 durch Bohrungen 24 gebildet. Diese Bohrungen 24 weisen gleiche Durchmesser und untereinander die gleichen Abstände auf und sind hintereinander in axialer Richtung angeordnet. Allerdings wären auch Ausführungsformen denkbar, bei denen die Bohrungen 24 nicht hintereinander angeordnet sind oder deren Bohrungen 24 verschiedene Durchmesser aufweisen oder untereinander verschiedene Abstände haben.

In der Ausführungsform nach Fig.3b ist der Ablaufquerschnitt durch eine axial ausgerichtete Nut 25 in der Wand 21 des Rohres 19 gebildet. Die Breite (oder auch die Tiefe) der Nut 25 nimmt dabei entgegen der Absenkrichtung konusförmig zu. Außerdem ist ein Großteil der Querschnittsfläche der Nut 25 in einem oberen Teil des Rohres 19 angeordnet, der in den Druckraum 6 hineinragt.

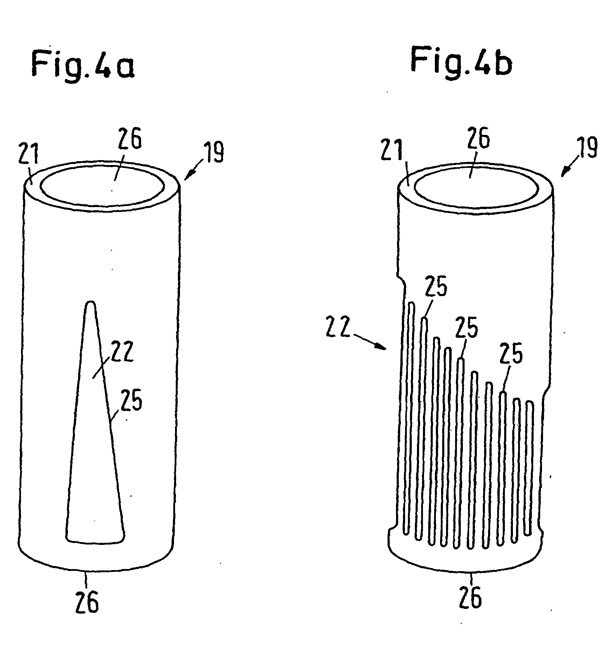

In Fig. 4a und 4b sind zwei Ausgestaltungen von Rohren 19 dargestellt. Die Fig. 4a zeigt hierbei ein Rohr 19 in dessen Wand 21 eine konusförmige Nut 25 angeordnet ist. Bei einem Schnelltrennvorgang wird erfindungsgemäß diese Nut 25 in Richtung von dem breiten Ende zu der Spitze hin von der Abdeckhülse 20 zunehmend abgedeckt. Hierdurch weist die Vorrichtung zu Beginn eines Absenkvorganges zunächst einen sehr geringen Strömungswiderstand des Strömungspfades auf, der mit zunehmender Absenkung jedoch überproportional zunimmt. Durch diese Zunahme des Strömungswiderstandes während eines Schnelltrennvorganges kann das Stützelement 14 wirksam abgebremst werden.

In der Ausführungsform nach Fig. 4b weist das Rohr 19 in seiner Wand 21 mehrere axial ausgerichtete Nuten 25 auf. Diese haben jeweils eine längliche Querschnittsfläche und sind parallel zueinander angeordnet. Die Nuten 25 weisen verschiedene Längen auf und schließen zu einer Seite hin bündig ab. Auf der anderen Seite nehmen die Nuten 25 in Umfangsrichtung des Rohres 19 der Länge nach zu.

Bei einem Absenkvorgang einer Vorrichtung mit einem derartigen Rohr 19 werden die parallel angeordneten Nuten 25 von der Seite, an der die Nuten 25 bündig abschließen, in Richtung der Seite, an der die Nuten 25 der Länge nach abgestuft abschließen, durch die Abdeckhülse 20 zunehmend umgeben. Auf diese Weise kann das Druckfluid zu Beginn eines Absenkvorganges zunächst über einen relativ großen Ablaufquerschnitt durch den Strömungspfad und in die Steuerdruckleitung 7 fließen. Mit zunehmendem Absenken des Stützelements 14 wird jedoch die Abdeckhülse 20 immer mehr Nuten 25 vollständig einschließen. Dabei wird der Strömungswiderstand mit zunehmender Absenkung überproportional erhöht. Somit wird auch hierdurch ein wirksames Abbremsen des Stützelementes 14 bei einem Schnelltrennvorgang erreicht.

## Patentansprüche

1. Vorrichtung zur hydrostatischen Abstützung eines Walzenmantels, die mindestens ein bewegliches Stützelement (14), das kolbenartig in einem Druckraum (6) geführt ist, in dem über mindestens eine Steuerdruckleitung (7) ein Druckfluid zu- und/oder abführbar ist, und eine Drossel, die den Strömungswiderstand für das Fluid verändert, aufweist, wobei die Drossel von dem Stützelement (14) betätigbar ist, **dadurch gekennzeichnet, daß** die Drossel eine Rohr-Hülse-Anordnung mit einem Rohr (19) und einer Abdeckhülse (20) aufweist, die relativ zueinander verschiebbar sind, wobei ein Strömungspfad durch die Rohr-Hülse-Anordnung (18) verläuft, dessen Strömungswiderstand durch die Position des Rohres (19) relativ zur Abdeckhülse (20) steuerbar ist.

2. Vorrichtung nach Anspruch 1, **dadurch gekennzeichnet, daß** ein beweglicher Teil der Drossel mit dem beweglichen Stützelement (14) verbunden ist.

3. Vorrichtung nach Anspruch 1 oder 2, **dadurch gekennzeichnet, daß** ein Ablaufquerschnitt (22) des Strömungspfades in einer Wand (21) eines der beiden Teile von Rohr (19) und Abdeckhülse (20) angeordnet und durch das andere der beiden Teile zumindest teilweise verschließbar ist.

4. Vorrichtung nach einem der Ansprüche 1 bis 3, **dadurch gekennzeichnet, daß** die Abdeckhülse (20) aus einem flexiblen Material besteht.

5. Vorrichtung nach einem der Ansprüche 1 bis 4, **dadurch gekennzeichnet, daß** das Rohr (19) über einen gesamten Kolbenhub (H) des Stützelementes von der Abdeckhülse umgeben ist.

6. Vorrichtung nach einem der Ansprüche 1 bis 5, **dadurch gekennzeichnet, daß** das Rohr (19) mit dem beweglichen Stützelement (14) und die Abdeckhülse (20) mit der Steuerdruckleitung (7) verbunden ist.

7. Vorrichtung nach einem der Ansprüche 1 bis 6, **dadurch gekennzeichnet, daß** die Abdeckhülse (20) in einer Aufweitung (23) der Steuerdruckleitung (7) angeordnet ist, wobei die Aufweitung (23) in einem Teil der Steuerdruckleitung (7) liegt, der sich an den Druckraum (6) anschließt.

8. Vorrichtung nach einem der Ansprüche 1 bis 5, **dadurch gekennzeichnet, daß** das Rohr (19) mit der Steuerdruckleitung (7) und die Abdeckhülse (20) mit dem beweglichen Stützelement (14) verbunden ist und beide Stirnseiten (26) des Rohres (19) offen sind.

9. Vorrichtung nach einem der Ansprüche 2 bis 8, **dadurch gekennzeichnet, daß** der Ablaufquerschnitt (22) durch mehrere Bohrungen (24) in der Wand des Rohres (19) oder der Abdeckhülse (20) gebildet ist.

10. Vorrichtung nach Anspruch 9, **dadurch gekennzeichnet, daß** die Bohrungen (24) über die Länge des Rohres (19) gleichmäßig verteilt sind.

11. Vorrichtung nach Anspruch 9, **dadurch gekennzeichnet, daß** die Bohrungen (24) nach einer vorbestimmten nicht linearen Funktion über die Länge des Rohres (19) verteilt sind, bei der der Ablaufquerschnitt (22) zum Ende einer Absenkbewegung überproportional abnimmt.

12. Vorrichtung nach einem der Ansprüche 2 bis 8, **dadurch gekennzeichnet, daß** der Ablaufquerschnitt (22) durch mindestens eine sich axial erstreckende Nut (25) in einer Berührungsfläche zwischen Rohr (19) und Abdeckhülse (20), insbesondere in der Wand (21) des Rohres (19) gebildet ist.

13. Vorrichtung nach Anspruch 12, **dadurch gekennzeichnet, daß** die Nut (25) eine sich in Axialrichtung verändernde Querschnittsform aufweist, insbesondere eine konische Form.

14. Vorrichtung nach Anspruch 12, **dadurch gekennzeichnet, daß** der Ablaufquerschnitt (22) durch mehrere sich axial erstreckende Nuten (25) gebildet ist, die zumindest teilweise unterschiedliche Längen aufweisen, die insbesondere alle zu einer Seite hin bündig abschließen.

## Claims

1. Hydrostatic supporting device for the outer shell of a roll, which comprises at least one movable supporting element (14) which is guided in the manner of a piston in a pressure chamber (6), in which a pressure fluid can be supplied and/or discharged via at least one control pressure line (7), and a restrictor which changes the flow resistance for the fluid, it being possible for the restrictor to be actuated by the supporting element (14), **characterized in that** the restrictor has a tube-sleeve arrangement with a tube (19) and a covering sleeve (20) which can be displaced relative to each other, a flow path running through the tube-sleeve arrangement (18) and its flow resistance being controllable by means of the position of the tube (19) relative to the covering sleeve (20).

2. Device according to Claim 1, **characterized in that** a movable part of the restrictor is connected to the movable supporting element (14).

3. Device according to Claim 1 or 2, **characterized in that** a discharge cross section (22) of the flow path is arranged in a wall (21) of one of the two parts of tube (19) and covering sleeve (20) and can be closed, at least partly, by the other of the two parts.

4. Device according to one of Claims 1 to 3, **characterized in that** the covering sleeve (20) consists of a flexible material.

5. Device according to one of Claims 1 to 4, **characterized in that** the tube (19) is surrounded by the covering sleeve over the entire piston stroke (H) of the supporting element.

6. Device according to one of Claims 1 to 5, **characterized in that** the tube (19) is connected to the movable supporting element (14), and the covering sleeve (20) is connected to the control pressure line (7).

7. Device according to one of Claims 1 to 6, **characterized in that** the covering sleeve (20) is arranged in a widened portion (23) of the control pressure line (7), the widened portion (23) being located in a part of the control pressure line (7) which adjoins the pressure chamber (6).

8. Device according to one of Claims 1 to 5, **characterized in that** the tube (19) is connected to the control pressure line (7), and the covering sleeve (20) is connected to the movable supporting element (14), and both ends (26) of the tube (19) are open.

9. Device according to one of Claims 2 to 8, **characterized in that** the discharge cross section (22) is formed by a plurality of holes (24) in the wall of the tube (19) or of the covering sleeve (20) .

10. Device according to Claim 9, **characterized in that** the holes (24) are distributed uniformly over the length of the tube (19).

11. Device according to Claim 9, **characterized in that** the holes (24) are distributed over the length of the tube (19) in accordance with a predetermined nonlinear function, in which the discharge cross section (22) decreases disproportionately towards the end of a lowering movement.

12. Device according to one of Claims 2 to 8, **characterized in that** the discharge cross section (22) is formed by at least one groove (25) extending axially in a contact surface between tube (19) and covering sleeve (20), in particular in the wall (21) of the tube (19).

13. Device according to Claim 12, **characterized in that** the groove (25) has a cross-sectional shape which changes in the axial direction, in particular a conical shape.

14. Device according to Claim 12, **characterized in that** the discharge cross section (22) is formed by a plurality of grooves (25) which extend axially and, at least to some extent, have different lengths, which in particular all end flush on one side.

## Revendications

1. Dispositif pour le support hydrostatique de l'enveloppe d'un rouleau, qui présente au moins un élément de support mobile (14) qui est guidé à la manière d'un piston dans un espace de pression (6) dans lequel un fluide sous pression peut être alimenté et/ou évacué par le biais d'au moins une conduite de pression de commande (7), et un étranglement, qui modifie la résistance d'écoulement pour le fluide, l'étranglement pouvant être actionné par l'élément de support (14), **caractérisé en ce que** l'étranglement présente un agencement de tube et gaine avec un tube (19) et une gaine de recouvrement (20) qui peuvent coulisser l'un par rapport à l'autre, un chemin d'écoulement s'étendant de ce fait à travers l'agencement tube-gaine (18), dont la résistance à l'écoulement peut être commandée par la position du tube (19) par rapport à la gaine de recouvrement (20).

2. Dispositif selon la revendication 1, **caractérisé en ce qu'**une partie mobile de l'étranglement est connectée à l'élément de support mobile (14).

3. Dispositif selon la revendication 1 ou 2, **caractérisé en ce qu'**une section transversale de sortie (22) du chemin d'écoulement est prévue dans une paroi (21) de l'une des deux pièces constituées par le tube (19) et la gaine de recouvrement (20), et peut être au moins partiellement fermée par l'autre des deux pièces.

4. Dispositif selon l'une quelconque des revendications 1 à 3, **caractérisé en ce que** la gaine de recouvrement (20) se compose d'un matériau flexible.

5. Dispositif selon l'une quelconque des revendications 1 à 4, **caractérisé en ce que** le tube (19) est entouré par la gaine de recouvrement au-dessus d'une levée de piston totale (H) de l'élément de support.

6. Dispositif selon l'une quelconque des revendications 1 à 5, **caractérisé en ce que** le tube (19) est connecté à l'élément de support mobile (14) et la gaine de recouvrement (20) est connectée à la conduite de pression de commande (7).

7. Dispositif selon l'une quelconque des revendications 1 à 6, **caractérisé en ce que** la gaine de recouvrement (20) est disposée dans un élargissement (23) de la conduite de pression de commande (7), l'élargissement (23) se trouvant dans une partie de la conduite de pression de commande (7) qui se raccorde à l'espace de pression (6).

8. Dispositif selon l'une quelconque des revendications 1 à 5, **caractérisé en ce que** le tube (19) est connecté à la conduite de pression de commande (7) et la gaine de recouvrement (20) est connectée à l'élément de support mobile (14), et les deux côtés frontaux (26) du tube (19) sont ouverts.

9. Dispositif selon l'une quelconque des revendications 2 à 8, **caractérisé en ce que** la section transversale de sortie (22) est formée par plusieurs alésages (24) dans la paroi du tube (19) ou de la gaine de recouvrement (20).

10. Dispositif selon la revendication 9, **caractérisé en ce que** les alésages (24) sont répartis uniformément sur la longueur du tube (19).

11. Dispositif selon la revendication 9, **caractérisé en ce que** les alésages (24) sont répartis sur la longueur du tube (19) suivant une fonction prédéfinie non linéaire, la section transversale de sortie (22) diminuant de manière surproportionnelle vers la fin d'un mouvement d'abaissement.

12. Dispositif selon l'une quelconque des revendications 2 à 8, **caractérisé en ce que** la section transversale de sortie (22) est formée par au moins une rainure (25) s'étendant axialement, dans une face de contact entre le tube (19) et la gaine de recouvrement (20), notamment dans la paroi (21) du tube (19).

13. Dispositif selon la revendication 12, **caractérisé en ce que** la rainure (25) présente une forme en section transversale variant dans la direction axiale, notamment une forme conique.

14. Dispositif selon la revendication 12, **caractérisé en ce que** la section transversale de sortie (22) est formée par plusieurs rainures (25) s'étendant axialement, qui présentent au moins des longueurs partiellement différentes, qui se terminent en particulier toutes en affleurement d'un côté.
